# EUROPEAN PATENT APPLICATION

(11) **EP 0 831 248 A2**
(43) Date of publication of application: **25.03.1998**
(21) Application number: 97306707.7
(22) Date of filing: 01.09.1997
(51) Int. Cl.: F16G 11/12

(54) **Slack adjuster for ratchet-type load binder**

(30) Priority: 24.09.1996 US 719145
(71) Applicant: THE CROSBY GROUP, INC., Tulsa, OK 74101-3128 (US)
(72) Inventor: Suess, Thomas David, Longview, Texas 75604 (US)
(74) Representative: Gilmour, David Cedric Franklyn

(57) **Abstract**

A ratchet type load binder includes a slack adjustment linkage at one end of the ratchet binder which has an arcuate opening defining a first link receiving pocket and second link receiving pocket. A link operable within the slack take-up fitting is connected to a chain-type grab hook. Initial adjustment of the chain is done while the take-up link is in the first receiving pocket and, because of slack, moved to the second receiving pocket and thereby reduce the amount of ratcheting motion.

## Description

### BACKGROUND OF THE INVENTION

### 1. Field of the Invention.

The present invention relates to a tensioning device for chain used in load-tie down systems, and more particularly, to an improved ratchet style of load binder.

Use of chains and load binders to secure loads to vehicles such as flat bed trailers and railway flat cars is a common practice. Typically, a chain length greater than that required to pass over the load is connected at one of its ends to the vehicle bed, passed over the load, and connected at its opposite end to the vehicle bed. In order to tighten the chain and secure the load of the vehicle, a load binder is employed. A typical load binding device has a pair of hooks for engaging the chain at two space points with a means for pulling the hooks toward one another to tighten the chain about the load. One such arrangement is the use of a ratchet style of load binder such as, for example, found in U.S. Patent Nos. 2,198,181 and 4,130,269, and LEBUS ® Standard Ratchet Type Load Binders sold by The Crosby Group, Inc.

A ratchet style of load binder operates similar to a turnbuckle. As such, it is desirable to have as much slack in the chain taken up prior to operating the ratchet and therefore reduce the number of turns required to tension the load. When dealing with chain, there is usually slack that requires a great deal of ratcheting effort before the chain actually becomes tighten about the load.

A ratchet type load binder is comprised of a sleeve or barrel internally threaded with left hand acme or square threads at one end and right hand threads at the other end. Eye bolts are threadably attached at each end. A chain link and a hook are connected to each eye bolt. A ratcheting spur gear is attached to the barrel in the middle. A double acting ratchet and handle are rotatable about the barrel and spur gear to provide rotary motion to the barrel which draws the hooks toward or away from each other depending upon the direction of rotation.

### SUMMARY OF THE INVENTION

Accordingly, it is a primary object of this invention to provide a ratchet style of load binder having a slack adjustment member that will reduce the ratcheting motion required to tension and tighten the chain.

Another object of the invention is to provide a slack adjustment device and link used at one end of a ratchet-type load binder for taking up initial slack in the chain and thus reduce the amount of ratcheting motion.

Specifically, the invention is directed to a ratchet-type of load binder defined by first and second opposite attachment ends for chain. The opposite ends connect a load binder to two spaced points along the chain for drawing the points toward each other. At a first attachment end there is a link and hook. At the second end is an assembly comprised of a slack take-up fitting, a take-up link and a hook. The slack take-up fitting is comprised of a partial arcuate shape with an arcuate opening to receive the take-up link. The take-up link includes a first link receiving pocket and a second link receiving pocket within the arcuate opening.

### BRIEF DESCRIPTION OF THE DRAWINGS

Figure 1 is a perspective view of the ratchet-style of load binder according to the present invention;
Figure 1A is a front view of the chain connection to the hook.
Figure 2 is a partial view of a slack adjustment mechanism of this invention shown in the take-up mode;

### DETAILED DESCRIPTION OF THE PREFERRED EMBODIMENTS

While the invention is susceptible to various modifications and alternative constructions, there is shown in the drawings and there will thereafter be described in detail the description of the preferred or best known mode of the invention. It is to be understood, however, that the specific description and drawings are not intended to limit the invention to a specific form disclosed. On the contrary, it is intended that the scope of this patent include all modifications and alternative constructions thereof following within the spirit and scope of the invention as expressed in the appended claims to the full range of their equivalence.

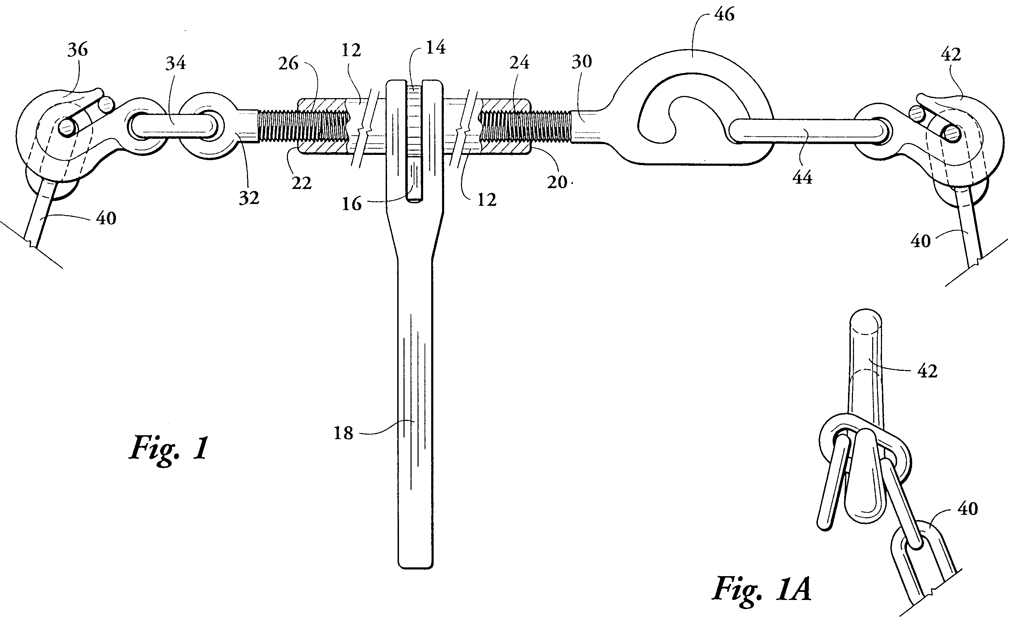

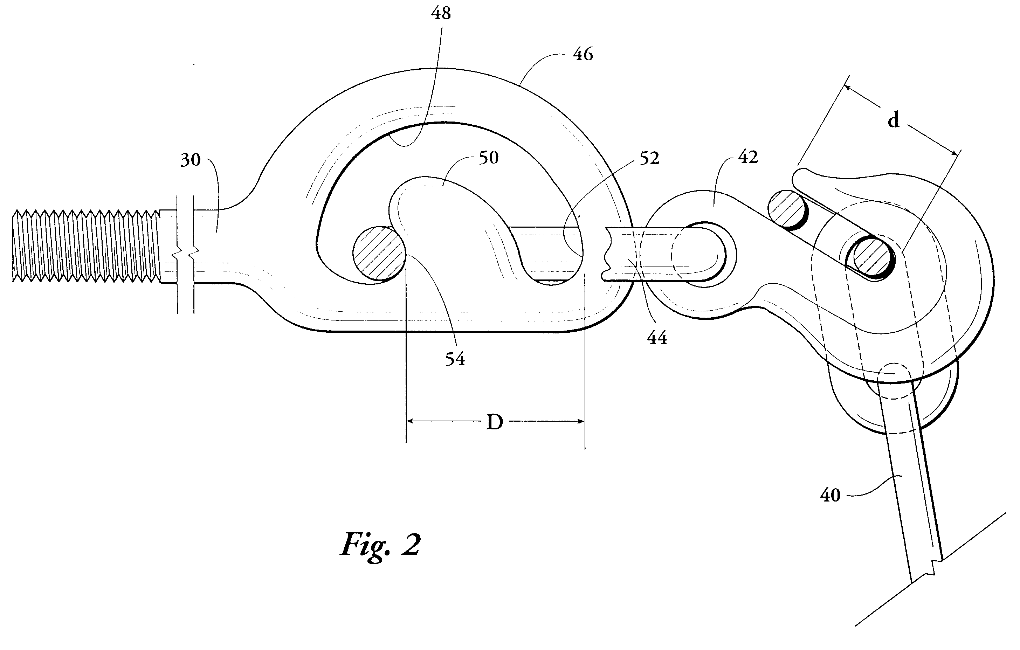

Referring now to Fig. 1 the load binder includes an axially extending tubular body or barrel portion **12** having ratchet teeth **14** formed around and attached to its outside periphery for engagement by a reversible pawl **16** mounted on ratchet handle **18**. The ratchet handle **18** and the pawl **16** are rotatable about the barrel so as to rotate teeth **14** in either clockwise or counterclockwise direction. The tubular barrel **12** includes opposite ends **20** and **22** which have respectively internal left and right hand threads **24** and **26** formed on their inner surfaces. The threaded end portions **24** and **26** are adapted to receive threaded member **30** and eye bolt member **32**. Rotation of ratchet handle **18** and pawl **16** in one direction will cause the threaded eye bolt members **30** and **32** to be drawn inwardly while reversing the pawl **16** will reverse the direction causing members **30** and **32** to move outwardly. At the end of eye bolt member **32** is a link **34** connected to a chain-type grab hook **36** to retain one portion of a load securing means in this case chain **40**. At the other end of the load binder connecting element **30** is an identical grab hook **42**, a larger pick-up link **44** connecting with slack adjustment member **46** formed at the end of member **30**. As shown in Fig. 2, the slack adjustment member includes an arcuate opening **48** and a nodule **50** which defines a first pick-up link receiving pocket **52** and a second pick-up link receiving pocket **54**.

A typical example of use of the invention, as for example, with a 5/16 inch chain, the chain **40** is connected to the grab hook **36**. The remaining part of the chain is then hand tightened and a link of the chain **40** inserted into the grab hook **42**. While the link **44** is in its extended, position as shown in Figure 1, it is retained within the first link receiving pocket **52** (See Figure 2). Because of the nature of the chain making the connection within the grab hook **42**, there is still about 1-1/2 inches of slack from the chain. Without the slack take-up fitting of this invention, it would have otherwise required many clicks (e.g., 12 clicks) of the ratchet to pull the chain taunt. In lieu thereof, the operator will take link 44 and move it approximately 1-1/2 inches into the second link receiving pocket **54** and in doing so will require only **5** clicks of the ratchet to achieve the initial chain tension.

The distance "D" between receiving pockets **52** and **54** will depend upon factors such as chain size, the depth "d" of the grab hook throat plus some clearance to get the chain link into the throat.

Whereas, the present invention has been described in relation to the drawings attached hereto, it should be understood that other and further modifications, apart from those shown or suggested herein, may be made within the spirit and scope of this invention.

## Claims

1. A slack adjustment fitting for at least one end of a load binder comprising:
link body having means to receive a take-up link, said body having a first take-up link receiving pocket and a spaced second take-up link receiving pocket.

2. Apparatus Comprising:
a load binder having first and second opposite attachment ends for connecting said load binder to two spaced points of a load securing means for drawing said points toward each other, said first attachment end comprising a link and hook, the second end comprising a slack take-up fitting connected to a take-up link and a hook to receive said load securing means said slack take-up fitting comprised of a body having means to receive said take-up link, said body having a first take-up link receiving pocket and a spaced second take-up link receiving pocket.

3. The load binder of claim 2 wherein said loadsecuring means in a link chain and the distance "D" between said first and second receiving pocket is slightly larger than a depth "d" of a throat for said hooks.

4. Apparatus comprising:
a load binder having first and second opposite attachment ends for connecting said load binder to two spaced points of a load securing means for drawing said points toward each other
said first attachment end comprising a connected link and hook
said second attachment end comprising a connected hook, take-up link and a slack take-up fitting, said slack take-up fitting having an opening to receive said take-up link, said opening defining a first receiving pocket for said take-up link in a first position, and a take-up nodule within said enclosure, said nodule having a second receiving pocket for said take-up link in a second position.

5. Apparatus of claim 4 wherein said enclosure is a partial arcuate shape.

6. Apparatus of claim 4 wherein said load securing means is a link chain, and each hook is a grab-hook having a throat to receive a link of said chain.

7. In a ratcheting type load binder having an axially extending barrel, a ratcheting handle and mechanism to rotate said barrel, said barrel having first and second outer ends which are internally and oppositely threaded;
said first outer end to receive a threaded eye bolt;
a chain link and first load receiving means assembled to said first eye bolt;
the second outer end comprised of a threaded slack take-up fitting to which is assembled a take-up link and a second said load receiving means connected to said take-up link, said slack take-up fitting comprised of an enclosed link, said enclosed link defining a first outward pocket for receiving said take-up link in a first position, and a second inward pocket for receiving said take-up link in a second position.

8. The load binder of claim 7 wherein said enclosed link includes means that separates said first and second receiving pockets.

9. The load binder of claim 8 wherein said means to separate is a nodule to permit said take-up link to go up and over from said first to said second receiving pocket and vice-versa.

10. The load binder of claim 7 wherein said load receiving means is a chain type grab hook.
